# EUROPÄISCHE PATENTSCHRIFT

(11) **EP 3 327 408 B1**
(45) Veröffentlichungstag und Bekanntmachung des Hinweises auf die Patenterteilung: **01.04.2020**
(21) Anmeldenummer: 16200772.8
(22) Anmeldetag: 25.11.2016
(51) Int. Cl.: G01F 23/284, G01S 13/88, G01S 7/02, G01S 7/03, G01S 7/41, H01Q 1/22, H01Q 19/19, H01Q 21/06, H01Q 25/00

(54) **SYSTEM ZUR ANALYSE EINER OBERFLÄCHE EINES FÜLLGUTES IN EINEM BEHÄLTER MIT EINER PARABOLANTENNE ZUR BEREITSTELLUNG ZWEIER UNTERSCHIEDLICHER RICHTCHARAKTERISTIKEN UND VERFAHREN ZUR FÜLLSTANDMESSUNG EINES FÜLLGUTES IN EINEM BEHÄLTER**
SYSTEM FOR ANALYZING A SURFACE OF A FILLING MATERIAL IN A CONTAINER WITH A PARABOLIC ANTENNA FOR PROVIDING TWO DIFFERENT DIRECTIONAL CHARACTERISTICS AND A METHOD FOR LEVEL MEASUREMENT OF A FILLING MATERIAL IN A CONTAINER
SYSTEME D'ANALYSE DE SURFACE D'UN MATERIAU DE REMPLISSAGE DANS UN RECIPIENT AVEC UNE ANTENNE PARABOLIQUE PERMETTANT DE FOURNIR DEUX CARACTERISTIQUES DIRECTIONNELLES DIFFERENTES, ET PROCEDE DE MESURE DE NIVEAU D'UN MATERIAU DE REMPLISSAGE DANS UN CONTENANT

(43) Veröffentlichungstag der Anmeldung: 30.05.2018
(73) Patentinhaber: VEGA Grieshaber KG, 77709 Wolfach (DE)
(72) Erfinder: KIENZLE, Klaus, 77736 Zell am Harmersbach (DE)
(74) Vertreter: Maiwald Patent- und Rechtsanwaltsgesellschaft mbH

(56) Entgegenhaltungen:
- DE-A1-102005 049 242
- US-A1- 2003 038 753
- US-A1- 2011 241 956

## Beschreibung

### Gebiet der Erfindung

Die Erfindung betrifft die radarbasierte Füllstandmessung. Insbesondere betrifft die Erfindung ein System zur Analyse einer Oberfläche eines Füllguts in einem Behälter mit einer Parabolantenne zur Bereitstellung zweier unterschiedlicher Richtcharakteristiken und ein Verfahren zur Füllstandmessung eines Füllgutes in einem Behälter.

### Hintergrund

Füllstandmessgeräte messen den Füllstand von Flüssigkeiten und Schüttgütern in einem Behälter. Radarbasierte Füllstandmessgeräte senden dazu hochfrequente Radarsignale auf die Füllgutoberfläche. Die Laufzeit des reflektierten Radarsignals von der Radarantenne zur Füllgutoberfläche und zurück ist direkt proportional zum zurückgelegten Weg, so dass sich aus der gemessenen Laufzeit unter Kenntnis der Behältergeometrie der Füllstand bestimmen lässt. Parabolantennen können dabei verwendet werden, um das Radarsignal in eine bestimmte Richtung zu fokussieren und aus eben dieser Richtung zu empfangen. Die im Stand der Technik bekannte und zur Füllstandmessung verwendete Parabolantenne weist lediglich eine Richtcharakteristik auf, die wesentlich von der Apertur des Parabolspiegels bestimmt wird. Radarbasierte Füllstandmessgeräte zeichnen sich unter anderem durch hohe Messgenauigkeit aus.

US 2003/0038753 A1 beschreibt eine Mikrowellenantenne mit einem Sub-Reflektor für die Satellitenkommunikation.

US 2011/0241956 A1 beschreibt eine Cassegrain-Antenne mit einem Hauptreflektor und einem Sub-Reflektor.

DE 10 2005 049 242 A1 beschreibt eine Parabolantenne mit konischer Streuscheibe für ein Füllstandradar.

### Zusammenfassung der Erfindung

Eine Aufgabe der Erfindung besteht darin, eine verbesserte Verwendung von Radarsignalen zur Füllstandmessung anzugeben. Diese Aufgabe wird durch die Gegenstände der unabhängigen Patentansprüche gelöst. Weiterbildungen der Erfindung ergeben sich aus den Unteransprüchen und der folgenden Beschreibung.

Ein erster Aspekt der Erfindung betrifft ein System zur Analyse einer Oberfläche eines Füllguts in einem Behälter mit einer Parabolantenne zur Bereitstellung zweier unterschiedlicher Richtcharakteristiken, wobei die Parabolantenne eine Sende- und Empfangseinheit zum Einspeisen und Empfangen eines Radarsignals, einen Parabolspiegel zur Reflexion des Radarsignals und einen Subreflektor zur Reflexion des Radarsignals aufweist. Des Weiteren weist der Subreflektor eine Öffnung auf.

Die Sende- und Empfangseinheit sendet oder empfängt ein Radarsignal und ist vorzugsweise in dem Parabolspiegel angeordnet oder ragt in diesen hinein. Der Subreflektor kann vor der Sende- und Empfangseinheit angeordnet sein, so dass das von der Sende- und Empfangseinheit abgestrahlte Radarsignal vom Subreflektor zurück zum Parabolspiegel reflektiert wird. Die Parabolantenne unterscheidet sich vom Stand der Technik hinsichtlich der Öffnung im Subreflektor, die Radarsignale wie durch einen Hohlleiter durch den Subreflektor treten lässt und gemäß weiterer Ausführungsbeispiele in unterschiedlicher Weise ausgeführt sein kann. Im Sendemodus wird daher das Radarsignal nicht nur über den Parabolspiegel, sondern zusätzlich durch die Öffnung im Subreflektor abgestrahlt. Aufgrund der längeren Laufzeit wird das Radarsignal von dem Parabolspiegel später abgestrahlt als von der Öffnung im Subreflektor. Außerdem weisen der Parabolspiegel und die Öffnung im Subreflektor vorteilhafterweise unterschiedliche Richtcharakteristiken auf, was im Weiteren ausführlicher erläutert werden wird. Analog wird das von dem Füllgut reflektierte Radarsignal im Empfangsmodus einerseits direkt durch die Öffnung im Subreflektor empfangen, andererseits wird das Radarsignal auch von dem Parabolspiegel zum Subreflektor und weiter zur Sende- und Empfangseinheit reflektiert. Dabei kommen wiederum die unterschiedlichen Laufzeiten und die Richtcharakteristiken der Öffnung im Subreflektor und des Parabolspiegels zum Tragen. Aufgrund der beiden Ausbreitungsmodi des Radarsignals im Sende- wie im Empfangsmodus empfängt die Sende- und Empfangseinheit vier Echos des abgestrahlten Radarsignals. Die vier Echos werden aufgrund der unterschiedlichen Ausbreitungswege des Radarsignals zu unterschiedlichen Zeiten empfangen. Außerdem unterscheiden sich die Echos aufgrund der unterschiedlichen Richtcharakteristiken der Öffnung des Subreflektors und des Parabolspiegels. Die vier Echos können verwendet werden, um Informationen über die Füllstandhöhe und die Topographie der Füllgutoberfläche zu gewinnen. Letzteres ist insbesondere bei Schüttgütern relevant, bei denen die Oberfläche des Schüttgutes nicht notwendigerweise eben ist. Weitere Erläuterungen zu diesen Vorteilen der vorliegenden Erfindung erfolgen im Kontext weiterer Ausführungsbeispiele.

Gemäß einer weiteren Ausführungsform ist die Parabolantenne derart ausgeführt, dass eine erste Richtcharakteristik durch die Öffnung im Subreflektor und eine zweite Richtcharakteristik durch den Parabolspiegel bereitgestellt wird.

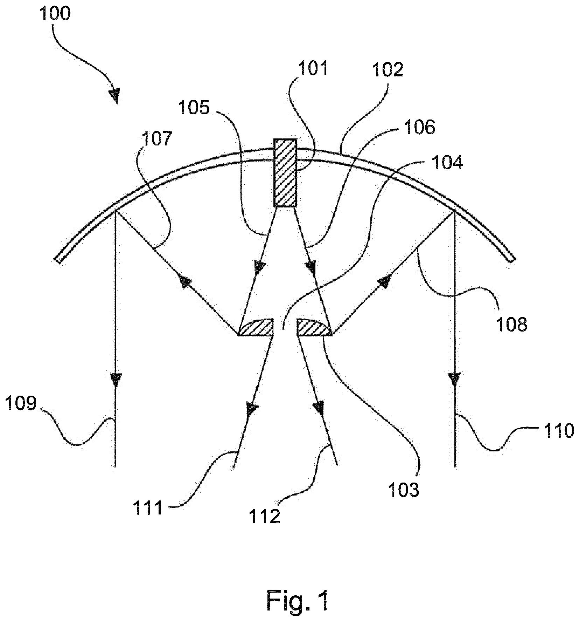

Dabei beschreibt eine Richtcharakteristik die Winkelabhängigkeit der Stärke gesendeter oder empfangener Radarsignale. Da die Apertur der Öffnung im Subreflektor in der Regel kleiner ist als die des Parabolspiegels, hat die Öffnung im Subreflektor in der Regel eine schwächere Richtwirkung als der Parabolspiegel. Die Öffnung im Subreflektor leuchtet daher in der Regel einen größeren Bereich der Füllgutoberfläche aus als der Parabolspiegel. Insbesondere sind Sende- und Empfangseinheit, Subreflektor und Parabolspiegel vorzugsweise so angeordnet, dass die über den Parabolspiegel abgestrahlten Strahlen im Wesentlichen parallel verlaufen. Abweichungen von der Parallelität entstehen dabei insbesondere durch Fertigungstoleranzen und die Tatsache, dass die Sende- und Empfangseinheit aus offensichtlichen Gründen nicht als ideal punktförmig realisiert werden kann. In der Regel sind die Abweichungen von der Parallelität jedoch klein, so dass der Parabolspiegel eine starke Richtwirkung aufweist. Eine Ausführungsform davon kann z.B. der Fig. 1 und deren folgender Beschreibung entnommen werden.

Gemäß einer weiteren Ausführungsform ist die Parabolantenne derart ausgeführt, dass in einem Sendemodus das Radarsignal von der Sende- und Empfangseinheit in Richtung des Subreflektors abgestrahlt wird, und ein erster Teil dieses Radarsignals durch die Öffnung des Subreflektors tritt, so dass dieser erste Teil des Radarsignals mit der ersten Richtcharakteristik in Richtung eines Objekts abgestrahlt wird, und ein zweiter Teil des Radarsignals vom Subreflektor zum Parabolspiegel und von dort in Richtung des Objekts reflektiert wird, so dass dieser zweite Teil des Radarsignals mit der zweiten Richtcharakteristik und längerer Laufzeit im Vergleich zu dem ersten Teil des Radarsignals abgestrahlt wird.

Das Radarsignal wird also über zwei Ausbreitungsmodi abgestrahlt, einerseits direkt durch die Öffnung im Subreflektor und andererseits über den Parabolspiegel. Aufgrund des längeren Laufweges wird das Radarsignal über den Parabolspiegel später als durch die Öffnung im Subreflektor abgestrahlt. Weiterhin unterscheiden sich die beiden Ausbreitungsmodi hinsichtlich der Richtcharakteristik. Dabei weist der Parabolspiegel aufgrund der größeren Apertur in der Regel eine stärkere Richtwirkung auf als die Öffnung im Subreflektor. Da auch für den Empfang des vom Objekt reflektierten Radarsignals zwei Ausbreitungsmodi existieren, werden insgesamt vier Echos des abgestrahlten Radarsignals empfangen. Bei dem Objekt handelt es sich insbesondere um ein Füllgut in einem Behälter. Die vier empfangenen Echos können dann verwendet werden, um Informationen über die Topographie der Füllgutoberfläche zu gewinnen.

Zum Beispiel kann beim Befüllen des Behälters ein Schüttkegel entstehen. Wenn die Parabolantenne derart ausgerichtet ist, dass über den Parabolspiegel im Wesentlichen die Spitze des Schüttkegels angestrahlt wird, kann aus der Laufzeit des über den Parabolspiegel abgestrahlten und empfangenen Radarsignals unter Kenntnis der Behältergeometrie die Höhe des Schüttkegels bestimmt werden. Darüber hinaus wird durch die Öffnung im Subreflektor ein größerer Bereich der Schüttkegeloberfläche angestrahlt als über den Parabolspiegel. Aus der zeitlichen Ausdehnung des durch die Öffnung im Subreflektor abgestrahlten und empfangenen Radarsignals kann auf Unterschiede der Füllstandhöhe in diesem Bereich der Schüttkegeloberfläche geschlossen werden. Aus der relativen zeitlichen Lage, der zeitlichen Ausdehnung und der Form bzw. Stärke der Radarsignalechos können somit Informationen über die Topographie der Füllgutoberfläche gewonnen werden. Beispielsweise kann ein Schüttkegel unterschieden werden von einem Abzugstrichter, der beim Entleeren des Behälters entstehen kann. Zur Analyse der Topographie der Füllgutoberfläche können die gemessenen Radarsignalechos verglichen werden mit vorab in einem Trainingsschritt für verschiedene Topographien der Füllgutoberfläche gespeicherten Radarsignalechos. Je mehr Echos für unterschiedliche Richtcharakteristiken dabei zur Verfügung stehen, umso zuverlässiger kann die Topographie der Füllgutoberfläche bestimmt werden.

Gemäß einer weiteren Ausführungsform ist die Parabolantenne dazu ausgeführt, in einem Empfangsmodus einen ersten Teil des von dem Objekt reflektierten Radarsignals auf direktem Weg durch die Öffnung des Subreflektors mittels der Sende- und Empfangseinheit zu empfangen, und einen zweiten Teil des von dem Objekt reflektierten Radarsignals über den Parabolspiegel und den Subreflektor mittels der Sende- und Empfangseinheit zu empfangen.

Dabei erreicht das durch die Öffnung im Subreflektor tretende Radarsignal die Sende- und Empfangseinheit früher als das über Parabolspiegel und Subreflektor propagierende Radarsignal.

Gemäß einer weiteren Ausführungsform ist die Öffnung im Subreflektor als Hohlleiter ausgeführt und an den Hohlleiter in Richtung des Objekts entweder eine Hornantenne, eine Stabantenne oder eine Patchantennengruppe angeordnet.

Durch diese Erweiterungen des Subreflektors können insbesondere unterschiedliche Richtcharakteristiken und Frequenzeigenschaften für die durch die Öffnung im Subreflektor abgestrahlte Strahlung realisiert werden. Insbesondere kann die Erweiterung des Subreflektors mit einer Hornantenne zu einer stärkeren Richtwirkung führen.

Gemäß einer weiteren Ausführungsform ist die Hornantenne am Subreflektor teilweise mit einem Füllmaterial gefüllt.

Das Füllmaterial kann die Ein- und Auskopplung des Radarsignals verbessern und die Richtcharakteristik für das durch die Öffnung des Subreflektors tretende Radarsignal beeinflussen. Dazu ist die Füllung vorteilhafterweise an der dem Objekt zugewandten Seite linsenförmig oder näherungsweise linsenförmig ausgeführt. Außerdem kann das Füllmaterial auch dem Schutz vor Verschmutzung, Korrosion oder der Ablagerung von Kondensat dienen. Es handelt sich bei dem Füllmaterial vorzugsweise um ein Dielektrikum mit niedriger Permittivität, zum Beispiel Polytetrafluoroethylen (PTFE), Polypropylen (PP), Polyvinylidenfluorid (PVDF) oder Polyetheretherketon (PEEK).

Gemäß einer weiteren Ausführungsform ist die Öffnung im Subreflektor auf einer der Sende- und Empfangseinheit zugewandten Seite aufgeweitet.

Mit anderen Worten vergrößert sich der Durchmesser der Öffnung im Subreflektor in Richtung der Sende- und Empfangseinheit, so dass der Subreflektor auf der der Sende- und Empfangseinheit zugewandten Seite eine größere Öffnung aufweist im Vergleich zu der dem Füllgut zugewandten Seite. Durch die Aufweitung kann insbesondere erreicht werden, dass mehr Energie des Radarsignals durch die Öffnung im Subreflektor tritt.

Gemäß einer weiteren Ausführungsform ist die Sende- und Empfangseinheit als Hornantenne ausgeführt.

Die Realisierung der Sende- und Empfangseinheit als Hornantenne erlaubt einen einfachen mechanischen Aufbau, der insbesondere modular erfolgen kann. Außerdem ist eine Hornantenne in der Regel einfach abzudichten und unempfindlich gegenüber Kondensat und/oder Verschmutzung. Die Ausführung der Sende- und Empfangseinheit als Hornantenne erfordert eine separate Befestigungsvorrichtung für den Subreflektor. Beispielsweise kann der Subreflektor mit mehreren Stegen an dem Parabolspiegel befestigt werden.

Gemäß einer weiteren Ausführungsform ist die Sende- und Empfangseinheit (101) dazu ausgeführt, mindestens zwei unterschiedliche Radarsignale, ein Radarsignal mit einer ersten Polarisation und ein weiteres Radarsignal mit einer zweiten Polarisation abzustrahlen, wobei in die Öffnung des Subreflektors ein Polarisationsfilter eingebaut ist, und das Radarsignal mit der ersten Polarisation das Polarisationsfilter passieren kann, wohingegen das Radarsignal mit der zweiten Polarisation von dem Polarisationsfilter blockiert wird.

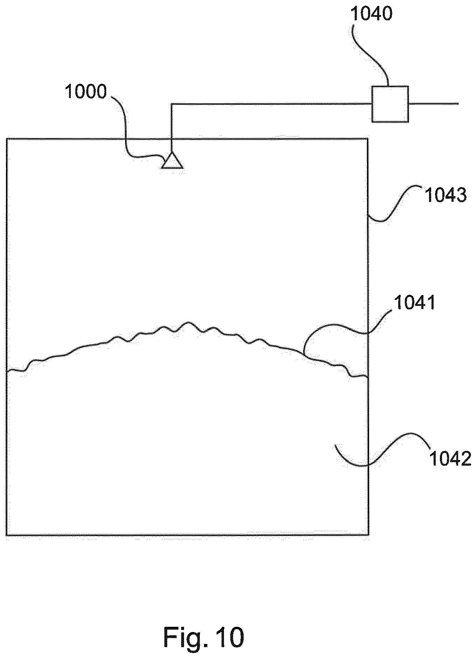

Das Radarsignal mit der ersten Polarisation wird nicht oder nur geringfügig von dem Polarisationsfilter in der Öffnung im Subreflektor absorbiert. Für dieses Radarsignal ergeben sich sowohl im Sende- als auch im Empfangsmodus zwei Ausbreitungsvarianten, zum einen direkt durch die Öffnung im Subreflektor und zum anderen via Reflexionen über den Parabolspiegel und den Subreflektor. In diesem Fall empfängt die Sende- und Empfangseinheit vier Echos des abgestrahlten Radarsignals. Diese vier Echos können von einer Auswerteeinheit wie in Fig. 10 dargestellt zur Analyse der Topographie der Füllgutoberfläche verwendet werden. Allerdings können sich die vier Echos aufgrund der geringen Laufzeitunterschiede zeitlich überlappen, was die topographische Analyse erschwert.

Das Radarsignal mit der zweiten Polarisation wird von dem Polarisationsfilter im Wesentlichen absorbiert bzw. blockiert. Das heißt, dass das durch die Öffnung des Subreflektors tretende Radarsignal vernachlässigbar schwach bis vollständig blockiert ist. In diesem Fall wird das Radarsignal nur über den Parabolspiegel abgestrahlt und empfangen, so dass die Sende- und Empfangseinheit nur ein von dem Füllgut reflektiertes Echo des Radarsignals empfängt, welches im Sende- und Empfangsmodus von dem Parabolspiegel reflektiert wurde. Insbesondere ist dieses Echo des Radarsignals nicht überlagert von anderen Echos aufgrund weiterer Ausbreitungsvarianten. Mit den beiden Polarisationen des Radarsignals können somit unterschiedliche, sich ergänzende Informationen gewonnen werden. Dadurch kann die Analyse der Topographie der Füllgutoberfläche verbessert werden.

Gemäß einer weiteren Ausführungsform ist die Sende- und Empfangseinheit dazu ausgeführt, mindestens zwei unterschiedliche Radarsignale, ein Radarsignal mit einer ersten Frequenz und ein weiteres Radarsignal mit einer zweiten Frequenz einzuspeisen und zu empfangen, wobei die erste Frequenz oberhalb einer Grenzfrequenz liegt, die zweite Frequenz unterhalb einer Grenzfrequenz liegt, und die Öffnung im Subreflektor als Hohlleiter ausgeführt ist, so dass nur Radarsignale über der Grenzfrequenz darin ausbreitungsfähig sind.

Unterhalb der Grenzfrequenz des Hohlleiters im Subreflektor ist das Radarsignal im Wesentlichen nicht durch den Subreflektor ausbreitungsfähig, d.h. es wird stark bis vollständig gedämpft. Radarsignale unterhalb der Grenzfrequenz werden daher im Wesentlichen nur über den Parabolspiegel abgestrahlt. In diesem Fall empfängt die Sende- und Empfangseinheit nur ein von dem Füllgut reflektiertes Echo des Radarsignals, welches im Sende- und Empfangsmodus von dem Parabolspiegel reflektiert wurde. Andererseits, wenn das Radarsignal oberhalb der Grenzfrequenz liegt, so ergeben sich sowohl in Sende- als auch in Empfangsrichtung zwei Ausbreitungsvarianten, zum einen direkt durch die Hohlleiter-Öffnung im Subreflektor und zum anderen via Reflexionen über den Parabolspiegel und den Subreflektor. In diesem Fall empfängt die Sende- und Empfangseinheit vier Echos des abgestrahlten Radarsignals. Diese empfangenen Echos können von einer Auswerteeinheit wie in Fig. 10 dargestellt zur topografischen Analyse der Füllgutoberfläche verwendet werden. Die Sende- und Empfangseinheit kann dabei dazu ausgeführt sein, die beiden Radarsignale unterschiedlicher Frequenz gleichzeitig oder sequentiell zu emittieren. Beispielsweise kann in einem ersten Betriebsmodus das erste Radarsignal und in einem zweiten Betriebsmodus das zweite Radarsignal durch die Sende- und Empfangseinheit emittiert werden. Alternativ können das erste und das zweite Radarsignal auch gleichzeitig abgestrahlt werden und die Echos mittels geeigneter Tiefpass-, Hochpass- oder Bandpassfilter im Empfänger getrennt werden.

Ein Aspekt der Erfindung betrifft ein System zur Analyse der Oberfläche eines Füllgutes in einem Behälter, das System aufweisend eine Parabolantenne nach einer der vorhergehenden Ausführungsformen, und eine Auswerteeinheit zur Analyse der Oberfläche des Füllgutes in dem Behälter basierend auf Echos des von der

### Parabolantenne abgestrahlten Radarsignals.

Die Parabolantenne ist vorzugsweise im oberen Bereich des Behälters angebracht und strahlt das Radarsignal in Richtung des Füllgutes ab. Die Auswerteeinheit kann mit der Parabolantenne integriert oder als separates Bauteil ausgeführt sein. Die Auswerteeinheit kann sowohl analoge Schaltungstechnik als auch digitale Hardware und Software umfassen. Insbesondere kann die Auswerteeinheit als eingebettetes System oder mithilfe eines PCs oder eines Servers realisiert sein. Ein Ausführungsbeispiel kann zum Beispiel der Fig. 10 und deren Beschreibung entnommen werden.

Gemäß einer weiteren Ausführungsform ist die Auswerteeinheit dazu ausgeführt, die vier Echos des abgestrahlten Radarsignals zur Analyse der Oberfläche des Füllgutes in dem Behälter auszuwerten, wobei ein erstes Echo durch Propagation des Radarsignals durch die Öffnung des Subreflektors im Sendemodus und im Empfangsmodus entsteht, ein zweites Echo durch Propagation des Radarsignals durch die Öffnung des Subreflektors im Sendemodus und über den Parabolspiegel und den Subreflektor im Empfangsmodus entsteht, ein drittes Echo durch Propagation des Radarsignals über den Subreflektor und den Parabolspiegel im Sendemodus und durch die Öffnung des Subreflektors im Empfangsmodus entsteht, und ein viertes Echo durch Propagation des Radarsignals über den Subreflektor und den Parabolspiegel im Sendemodus und im Empfangsmodus entsteht.

Aufgrund des direkten Ausbreitungspfades durch die Öffnung des Subreflektors wird das erste Echo in der Regel zuerst empfangen. Sowohl im Sende- als auch im Empfangsmodus ist dabei die Richtcharakteristik der Öffnung im Subreflektor wirksam. Bei dem zweiten und dem dritten Echo beeinflusst in einer Richtung die Richtcharakteristik der Öffnung des Subreflektors und in der Gegenrichtung die Richtcharakteristik des Parabolspiegels die Ausbreitung des Radarsignals. Aufgrund der Propagation über den Parabolspiegel werden das zweite und das dritte Echo in der Regel später von der Sende- und Empfangseinheit empfangen als das erste Echo. Bei dem vierten Echo beeinflusst die Richtcharakteristik des Parabolspiegels die Propagation des Radarsignals sowohl im Sende- als auch im Empfangsmodus. Das vierte Echo erreicht daher die Sende- und Empfangseinheit in der Regel später als das erste, das zweite und das dritte Echo.

Gemäß einer weiteren Ausführungsform ist die Sende- und Empfangseinheit dazu ausgeführt, mindestens zwei unterschiedliche Radarsignale mit einer ersten und einer zweiten Polarisation abzustrahlen, wobei in die Öffnung des Subreflektors ein Polarisationsfilter eingebaut ist, das Radarsignal mit der ersten Polarisation das Polarisationsfilter passieren kann, und das Radarsignal mit der zweiten Polarisation von dem Polarisationsfilter blockiert wird. Weiterhin ist die Auswerteeinheit dazu ausgeführt, vier Echos auszuwerten, wenn das Radarsignal mit der ersten Polarisation abgestrahlt wurde, und ein Echo auszuwerten, wenn das Radarsignal mit der zweiten Polarisation abgestrahlt wurde.

Wenn das Radarsignal derart polarisiert ist, dass es von dem Polarisationsfilter kaum oder gar nicht absorbiert wird, existieren im Sende- wie auch im Empfangsmodus zwei Ausbreitungsvarianten. In diesem Fall wertet die Auswerteeinheit vier Echos des Radarsignals aus. Andererseits, wenn das Radarsignal aufgrund seiner Polarisation von dem Polarisationsfilter im Wesentlichen absorbiert wird, so wertet die Auswerteeinheit nur ein Echo des Radarsignals aus.

Ein weiterer Aspekt der Erfindung betrifft ein Verfahren zur Füllstandmessung eines Füllgutes in einem Behälter, das Verfahren aufweisend die Schritte: Abstrahlen eines Radarsignals von einer Sende- und Empfangseinheit einer Parabolantenne in Richtung eines Subreflektors der Parabolantenne, Propagieren eines ersten Teils des abgestrahlten Radarsignals durch eine Öffnung des Subreflektors, wobei dieser erste Teil des Radarsignals mit einer ersten Richtcharakteristik in Richtung des Füllgutes abgestrahlt wird, Reflektieren eines zweiten Teils des abgestrahlten Radarsignals vom Subreflektor zu einem Parabolspiegel und von dem Parabolspiegel in Richtung des Füllgutes, wobei dieser zweite Teil des Radarsignals mit einer zweiten Richtcharakteristik und einer längeren Laufzeit im Vergleich zu dem ersten Teil des abgestrahlten Radarsignals in Richtung des Füllgutes abgestrahlt wird, Empfangen eines ersten Teils des von dem Füllgut reflektierten Radarsignals auf direktem Weg durch die Öffnung des Subreflektors mittels der Sende- und Empfangseinheit der Parabolantenne, Empfangen eines zweiten Teils des von dem Füllgut reflektierten Radarsignals über den Parabolspiegel und den Subreflektor mittels der Sende- und Empfangseinheit der Parabolantenne, und
Auswerten der empfangenen Radarsignale durch eine Auswerteeinheit zur Bestimmung des Füllstands des Füllgutes in dem Behälter.

Die Echos des abgestrahlten Radarsignals werden aufgrund der unterschiedlichen Ausbreitungswege zu unterschiedlichen Zeitpunkten empfangen. Außerdem unterscheiden sich die Echos aufgrund der unterschiedlichen Richtcharakteristiken der Öffnung im Subreflektor und des Parabolspiegels.

Gemäß einer weiteren Ausführungsform wertet die Auswerteeinheit vier Echos des abgestrahlten Radarsignals aus, wobei ein erstes Echo durch Propagation des Radarsignals durch die Öffnung des Subreflektors im Sendemodus und im Empfangsmodus entsteht, ein zweites Echo durch Propagation des Radarsignals durch die Öffnung des Subreflektors im Sendemodus und über den Parabolspiegel und den Subreflektor im Empfangsmodus entsteht, ein drittes Echo durch Propagation des Radarsignals über den Subreflektor und den Parabolspiegel im Sendemodus und durch die Öffnung des Subreflektors im Empfangsmodus entsteht, und ein viertes Echo durch Propagation des Radarsignals über den Subreflektor und den Parabolspiegel im Sendemodus und im Empfangsmodus entsteht.

Aufgrund des direkten Ausbreitungspfades durch die Öffnung des Subreflektors wird das erste Echo in der Regel zuerst empfangen. Sowohl im Sende- als auch im Empfangsmodus ist dabei die Richtcharakteristik der Öffnung im Subreflektor wirksam. Bei dem zweiten und dem dritten Echo beeinflusst in einer Richtung die Richtcharakteristik der Öffnung des Subreflektors und in der Gegenrichtung die Richtcharakteristik des Parabolspiegels die Ausbreitung des Radarsignals. Aufgrund der Propagation über den Parabolspiegel werden das zweite und das dritte Echo in der Regel später von der Sende- und Empfangseinheit empfangen als das erste Echo. Bei dem vierten Echo beeinflusst die Richtcharakteristik des Parabolspiegels die Propagation des Radarsignals sowohl im Sende- als auch im Empfangsmodus. Das vierte Echo erreicht daher die Sende- und Empfangseinheit in der Regel später als das erste, das zweite und das dritte Echo.

Im Folgenden werden Ausführungsbeispiele der Erfindung unter Bezugnahme auf die Figuren beschrieben.

### Kurze Beschreibung der Figuren

Fig. 1 zeigt eine Parabolantenne mit einer Öffnung im Subreflektor gemäß einem Ausführungsbeispiel der Erfindung.
Fig. 2 zeigt eine Parabolantenne mit einer Öffnung im Subreflektor gemäß einem weiteren Ausführungsbeispiel der Erfindung.
Fig. 3 zeigt eine Parabolantenne mit einer Hornantenne am Subreflektor gemäß einem Ausführungsbeispiel der Erfindung.
Fig. 4 zeigt eine Parabolantenne mit einer dielektrischen Stabantenne am Subreflektor gemäß einem Ausführungsbeispiel der Erfindung.
Fig. 5 zeigt eine Parabolantenne mit einer Patchantennengruppe am Subreflektor gemäß einem Ausführungsbeispiel der Erfindung.
Fig. 6 zeigt eine Parabolantenne mit einer Patchantennengruppe und einer dielektrischen Schutzschicht gemäß einem Ausführungsbeispiel der Erfindung.
Fig. 7 zeigt eine Parabolantenne mit einer Hornantenne am Subreflektor und einer Aufweitung an der Einspeiseseite der Hornantenne gemäß einem Ausführungsbeispiel der Erfindung.
Fig. 8 zeigt eine Parabolantenne mit einer teilweise gefüllten Hornantenne am Subreflektor gemäß einem Ausführungsbeispiel der Erfindung.
Fig. 9 zeigt eine Parabolantenne mit einer Hornantenne als Sende- und Empfangseinheit gemäß einem Ausführungsbeispiel der Erfindung.
Fig. 10 zeigt eine Parabolantenne in einem mit einem Füllgut gefüllten Behälter gemäß einem Ausführungsbeispiel der Erfindung.

Ähnliche oder gleiche Elemente in den Figuren werden mit ähnlichen oder gleichen Bezugszeichen beschrieben. Die Figuren sind schematische Darstellungen.

### Detaillierte Beschreibung von Ausführungsbeispielen

Die in Fig. 1 schematisch dargestellte Parabolantenne 100 weist eine Sende- und Empfangseinheit 101, einen Parabolspiegel 102 und einen Subreflektor 103 auf. Dabei weist der Subreflektor eine Öffnung 104 in Form eines Hohlleiters auf. Die Sende- und Empfangseinheit 101 strahlt ein Radarsignal in Richtung des Subreflektors ab, was durch die exemplarischen Radarsignalstrahlen 105 und 106 angedeutet wird. Ein erster Teil des abgestrahlten Radarsignals tritt durch die Öffnung im Subreflektor. Das durch die Öffnung im Subreflektor abgestrahlte Radarsignal wird durch die exemplarischen Radarsignalstrahlen 111 und 112 dargestellt. Ein zweiter Teil des von der Sende- und Empfangseinheit 101 abgestrahlten Radarsignals wird von dem Subreflektor 103 in Richtung des Parabolspiegels reflektiert, angedeutet durch die exemplarischen Radarsignalstrahlen 107 und 108. Der Parabolspiegel reflektiert die von dem Subreflektor kommenden Strahlen in eine Richtung, angedeutet durch die im Wesentlichen parallelen Radarsignalstrahlen 109 und 110. Die Parallelität der Radarsignalstrahlen 109 und 110 deutet an, dass der Parabolspiegel eine starke Richtwirkung haben kann. Demgegenüber kann die Öffnung des Subreflektors eine schwächere Richtwirkung aufweisen, angedeutet durch die auseinanderlaufenden Radarsignalstrahlen 111 und 112. Aufgrund der längeren Ausbreitungswege wird das Radarsignal von dem Parabolspiegel später abgestrahlt als von der Öffnung des Subreflektors. Damit strahlt die Parabolantenne das Radarsignal über zwei unterschiedliche Ausbreitungsmodi in Richtung des Füllgutes ab. Analog wird das von dem Füllgut reflektierte Radarsignal über zwei unterschiedliche Ausbreitungsmodi, zum einen durch die Öffnung im Subreflektor und zum anderen via Reflexionen über den Parabolspiegel und den Subreflektor, von der Sende- und Empfangseinheit empfangen. Aufgrund der beiden Ausbreitungsmodi im Sende- wie im Empfangsfall empfängt die Sende- und Empfangseinheit vier Echos des von ihr abgestrahlten Radarsignals. Diese vier Echos können verwendet werden, um Informationen über den Füllstand des Füllgutes in einem Behälter sowie über die Topographie der Oberfläche des Füllgutes zu gewinnen.

Entsprechend der Reziprozität gelten die Richtcharakteristiken der Öffnung des Subreflektors und des Parabolspiegels sowohl in Sende- wie auch in Empfangsrichtung. Der Einfachheit halber illustriert Fig. 1 nur Radarsignalstrahlen für den Sendemodus.

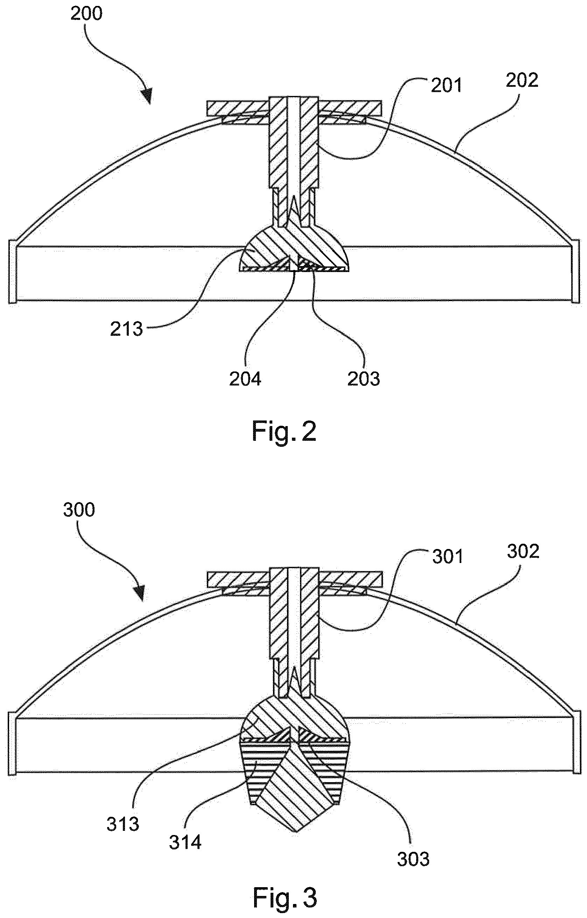

Die in Figur 2 dargestellte Parabolantenne 200 umfasst eine Sende- und Empfangseinheit 201, einen Parabolspiegel 202 sowie einen Subreflektor 203 mit einer Öffnung 204. Figur 2 zeigt außerdem ein Verbindungselement 213, welches die Sende- und Empfangseinheit 201 mit dem Subreflektor 203 verbindet. Ein ähnliches Verbindungselement ist in Fig. 1 aus Gründen der Übersichtlichkeit nicht dargestellt. Das Verbindungselement 213 besteht vorteilhafterweise aus einem Dielektrikum. Eine weitere vorteilhafte Wirkung des Verbindungselements 213 besteht in der Verhinderung des Eindringens von Füllgut in den Raum zwischen Sende- und Empfangseinheit und Subreflektor. Damit schützt das Verbindungselement 213 die Sende- und Empfangseinheit sowie den Subreflektor vor Verschmutzung, Korrosion sowie der Ablagerung von Kondensat. Dies ist von Bedeutung insbesondere in chemisch aggressiven Umgebungsbedingungen.

Die in Fig. 3 dargestellte Parabolantenne 300 umfasst eine Sende- und Empfangseinheit 301, einen Parabolspiegel 302 und einen Subreflektor 303 mit einer Öffnung 304. Des Weiteren ist an die Öffnung des Subreflektors eine Hornantenne 314 angebracht. Durch die Hornantenne wird die Richtcharakteristik für die durch die Öffnung 304 des Subreflektors 303 tretende Strahlung modifiziert. Insbesondere kann deren Richtwirkung verstärkt werden. Die Öffnung der Hornantenne 314 kann mit einem Material 313 gefüllt sein, ähnlich wie der Raum zwischen Sende- und Empfangseinheit und Subreflektor. Bei diesem Material handelt es sich vorzugsweise um ein Dielektrikum. Die Hornantenne kann auch mit einem anderen Material gefüllt sein wie der Raum zwischen Sende- und Empfangseinheit und Subreflektor. Das Füllmaterial der Hornantenne dient dem Schutz vor Verschmutzung, Korrosion sowie der Ablagerung von Kondensat ebenso wie der Stabilisierung der Hornantenne 314. Außerdem beeinflusst das Füllmaterial die Richtcharakteristik für die durch die Öffnung des Subreflektors tretende Strahlung. Aus diesem Grund ist die Füllung der Hornantenne in Abstrahlungsrichtung vorzugsweise linsenförmig oder näherungsweise linsenförmig ausgeführt. Aufgrund der kleineren Apertur weist die Öffnung im Subreflektor jedoch auch mit integrierter Hornantenne in der Regel eine schwächere Richtwirkung auf als der Parabolspiegel. Beispielsweise hat der Parabolspiegel einen Durchmesser von 96 mm, wohingegen die Öffnung der Hornantenne am Subreflektor nur einen Durchmesser von 14 mm hat. Damit erreicht der Parabolspiegel bei einer Frequenz von beispielsweise 78 GHz im W-Band Bereich einen Gewinn von circa 35 dBi, während der Gewinn der Hornantenne am Subreflektor lediglich bei 19 dBi liegt. Dies entspricht Öffnungswinkeln der Hauptkeule der Richtcharakteristik von circa 16° für die Hornantenne und 2.5° für den Parabolspiegel.

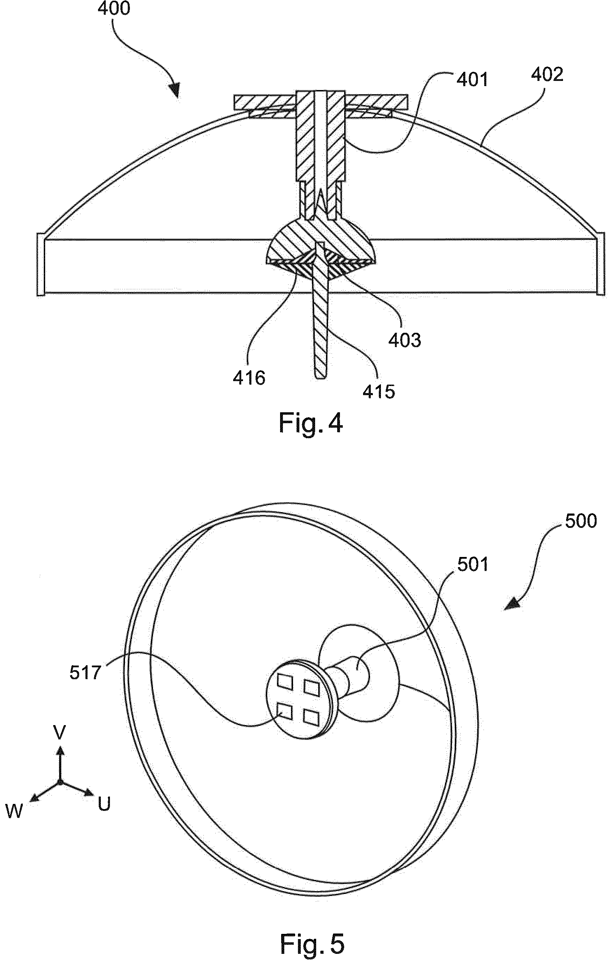

Die in Fig. 4 dargestellte Parabolantenne 400 umfasst eine Sende- und Empfangseinheit 401, einen Parabolspiegel 402 und einen Subreflektor 403. An den Subreflektor 403 ist eine dielektrische Stabantenne 415 angebracht. Die Stabantenne 415 weist eine scharfe Resonanzfrequenz auf. Dadurch sind auch die Ausbreitungseigenschaften des Radarsignals durch die Öffnung im Subreflektor stark frequenzabhängig. Die Stabantenne 415 kann durch einen konischen Abschluss 416 des Subreflektors stabilisiert werden.

Die in Fig. 5 dargestellte Parabolantenne 500 umfasst eine Sende- und Empfangseinheit 501, einen Parabolspiegel 502 und einen Subreflektor 503. An die Öffnung des Subreflektors ist eine Patchantennengruppe 517 angebracht. Die Patchantennengruppe 517 hat im Allgemeinen beliebig viele Antennenelemente, in Fig. 5 sind vier Antennenelemente dargestellt. Die Antennenelemente bestehen vorzugsweise aus einem metallischen Material. Über die Zahl der Antennenelemente kann die Richtwirkung der Patchantennengruppe beeinflusst werden. Die Anregung der Antennenelemente der Patchantennengruppe kann beispielsweise über ein darunterliegendes Verteilnetzwerk oder über eine Aperturkopplung erfolgen. Die Größe der Antennenelemente bestimmt maßgeblich die Frequenzeigenschaften der Patchantennengruppe.

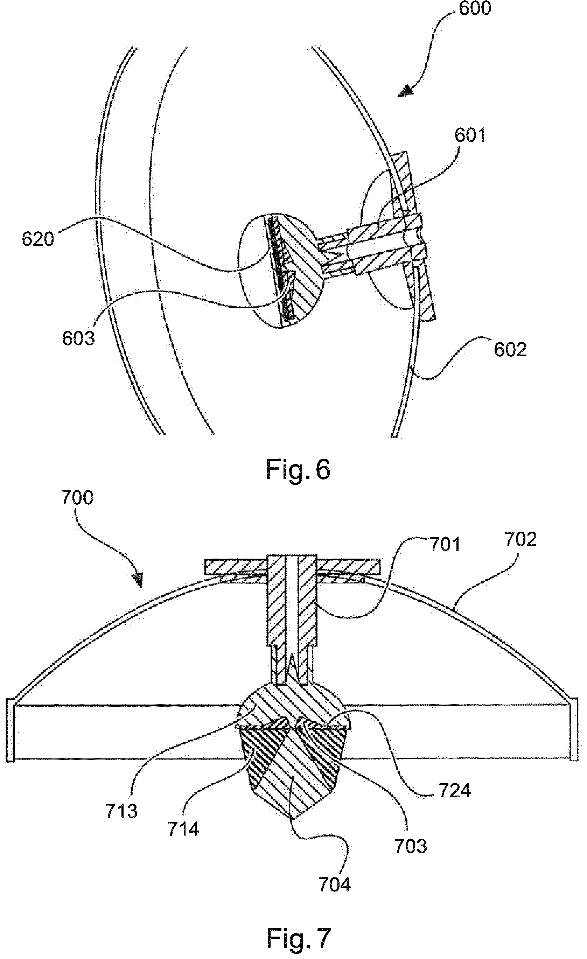

Die in Fig. 6 dargestellte Parabolantenne 600 umfasst eine Sende- und Empfangseinheit 601, einen Parabolspiegel 602 und einen Subreflektor 603. Ähnlich wie in Fig. 5 ist an den Subreflektor eine Patchantennengruppe angebracht. In Fig. 6 besteht die Patchantennengruppe aus zwei Schichten. Durch die im Allgemeinen mehrlagige Struktur der Patchantennengruppe kann insbesondere die Breitbandigkeit verbessert werden. Vor der Patchantennengruppe ist weiterhin ein dielektrisches Schutzelement 620 angebracht, das die Patchantennen vor Verschmutzung, Korrosion und der Ablagerung von Kondensat schützt. Das Schutzelement 620 hat somit eine Funktion ähnlich einem Radom. Das Schutzelement 620 muss nicht notwendigerweise eben wie in Fig. 6 ausgeführt sein. Alternativ kann das Schutzelement 620 zum Beispiel konisch zulaufend oder auch linsenförmig realisiert werden (nicht dargestellt).

Die in Fig. 7 dargestellte Parabolantenne 700 umfasst eine Sende- und Empfangseinheit 701, einen Parabolspiegel 702 und einen Subreflektor 703 mit einer Öffnung 704. Ähnlich wie in Fig. 3 ist an den Subreflektor eine Hornantenne 714 angebracht. In Fig. 7 ist jedoch die Öffnung im Subreflektor auf der der Sende- und Empfangseinheit zugewandten Seite 724 aufgeweitet. Durch diese Aufweitung der Öffnung 704 des Subreflektors 703 können die Ausbreitungseigenschaften des Radarsignals durch die Öffnung des Subreflektors verbessert werden. Insbesondere kann dadurch mehr Energie des von der Sende- und Empfangseinheit 701 abgestrahlten Radarsignals durch die Öffnung 704 des Subreflektors 703 treten.

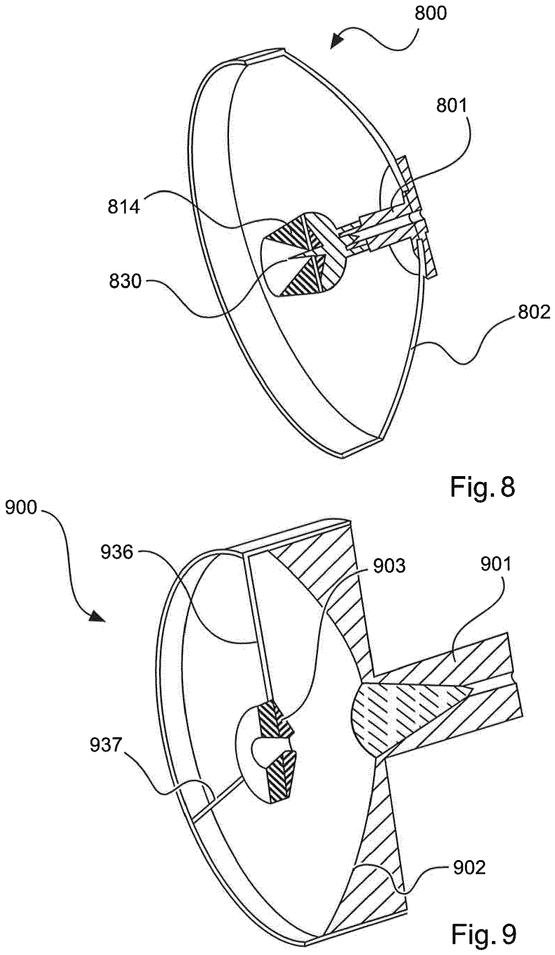

Die in Fig. 8 dargestellte Parabolantenne 800 umfasst eine Sende- und Empfangseinheit 801, einen Parabolspiegel 802 und einen Subreflektor 803. Ähnlich wie in den Figuren 3 und 7 ist an den Subreflektor eine Hornantenne 814 angebracht. In Fig. 8 ist die Hornantenne 814 jedoch nur teilweise mit einem Füllmaterial 830 gefüllt. Durch die teilweise Füllung der Öffnung der Hornantenne 814 kann deren Richtcharakteristik modifiziert und die Hornantenne vor Verschmutzung, Korrosion sowie der Ablagerung von Kondensat geschützt werden.

Die in Fig. 9 dargestellte Parabolantenne 900 umfasst eine Sende- und Empfangseinheit 901, einen Parabolspiegel 902 und einen Subreflektor 903. Ähnlich wie in Fig. 8 ist die Öffnung im Subreflektor 903 auf der der Sende- und Empfangseinheit zugewandten Seite aufgeweitet. Weiterhin ist an der der Sende- und Empfangseinheit abgewandten Seite des Subreflektors eine Hornantenne realisiert. Im Unterschied zu den vorherigen Ausführungsbeispielen ist in Fig. 9 die Sende- und Empfangseinheit 901 als Hornantenne ausgeführt. Dies erfordert, dass der Subreflektor durch Verstrebungen an dem Parabolspiegel befestigt wird, exemplarisch dargestellt durch die Verstrebungen 936 und 937. Aus Stabilitätsgründen umfasst die Parabolantenne vorzugsweise mehr als zwei Verstrebungen zur Befestigung des Subreflektors an dem Parabolspiegel. Aus Darstellungsgründen zeigt Fig. 6 jedoch nur zwei Verstrebungen.

Figur 10 stellt einen Behälter 1043 mit einem Füllgut 1042 dar. In dem Behälter befindet sich die Parabolantenne 1000. Außerdem illustriert Fig. 10 die Auswerteeinheit 1040 zur Analyse der Oberfläche 1041 des Füllgutes in dem Behälter 1043 basierend auf Echos des von der Parabolantenne abgestrahlten Radarsignals. Für den Fachmann leicht zu erkennend kann die Auswerteeinheit 1040 auch in dem Behälter angeordnet oder mit der Parabolantenne integriert sein. Die Auswerteeinheit kann sowohl analoge Schaltungstechnik als auch digitale Hardware und Software umfassen. Insbesondere kann die Auswerteeinheit als eingebettetes System oder mithilfe eines PCs oder Servers realisiert sein.

Ergänzend sei daraufhingewiesen, dass "umfassend" und "aufweisend" keine anderen Elemente oder Schritte ausschließt und die unbestimmten Artikel "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. System zur Analyse einer Oberfläche eines Füllgutes in einem Behälter, das System aufweisend:
eine Parabolantenne (100) zur Bereitstellung zweier unterschiedlicher Richtcharakteristiken, die Parabolantenne aufweisend:
eine Sende- und Empfangseinheit (101) zum Einspeisen und Empfangen eines Radarsignals;
einen Parabolspiegel (102) zur Reflexion des Radarsignals;
einen Subreflektor (103) zur Reflexion des Radarsignals,
wobei der Subreflektor eine Öffnung (104) aufweist;
eine Auswerteeinheit (1040) zur Analyse der Oberfläche (1041) des Füllgutes in dem Behälter (1043) basierend auf Echos des von der Parabolantenne abgestrahlten Radarsignals.

2. System nach Anspruch 1,
wobei die Öffnung (104) im Subreflektor (103) eine erste Richtcharakteristik bereitstellt, und
wobei der Parabolspiegel (102) eine zweite Richtcharakteristik bereitstellt.

3. System nach einem der vorhergehenden Ansprüche,
wobei die Parabolantenne derart ausgeführt ist, dass in einem Sendemodus das Radarsignal von der Sende- und Empfangseinheit (101) in Richtung des Subreflektors (103) abgestrahlt werden kann, und
wobei die Parabolantenne derart ausgeführt ist, dass ein erster Teil dieses Radarsignals durch die Öffnung des Subreflektors treten kann, so dass dieser erste Teil des Radarsignals mit der ersten Richtcharakteristik in Richtung eines Objekts abgestrahlt werden kann, und
wobei die Parabolantenne derart ausgeführt ist, dass ein zweiter Teil des Radarsignals vom Subreflektor zum Parabolspiegel (102) und von dort in Richtung des Objekts reflektiert werden kann, so dass dieser zweite Teil des Radarsignals mit der zweiten Richtcharakteristik und längerer Laufzeit im Vergleich zu dem ersten Teil des Radarsignals abgestrahlt werden kann.

4. System nach Anspruch 3,
wobei die Parabolantenne dazu ausgeführt ist, in einem Empfangsmodus einen ersten Teil des von dem Objekt reflektierten Radarsignals auf direktem Weg durch die Öffnung (104) des Subreflektors (103) mittels der Sende- und Empfangseinheit (101) zu empfangen, und
wobei die Parabolantenne dazu ausgeführt ist, einen zweiten Teil des von dem Objekt reflektierten Radarsignals über den Parabolspiegel (102) und den Subreflektor mittels der Sende- und Empfangseinheit zu empfangen.

5. System nach einem der vorhergehenden Ansprüche,
wobei die Öffnung (104) des Subreflektors (103) als Hohlleiter ausgeführt ist und
wobei an den Hohlleiter im Subreflektor in Richtung des Objekts entweder eine Hornantenne, eine Stabantenne oder eine Patchantennengruppe angeordnet ist.

6. System nach Anspruch 5,
wobei die Hornantenne (814) am Hohlleiter des Subreflektors (803) teilweise mit einem Füllmaterial (830) gefüllt ist.

7. System nach einem der vorhergehenden Ansprüche,
wobei die Öffnung im Subreflektor (703) auf einer der Sende- und Empfangseinheit (701) zugewandten Seite (724) aufgeweitet ist.

8. System nach einem der vorhergehenden Ansprüche,
wobei die Sende- und Empfangseinheit (901) in Form einer Hornantenne ausgeführt ist.

9. System nach einem der vorhergehenden Ansprüche,
wobei die Sende- und Empfangseinheit (101) dazu ausgeführt ist, mindestens zwei unterschiedliche Radarsignale, ein Radarsignal mit einer ersten Polarisation und ein weiteres Radarsignal mit einer zweiten Polarisation abzustrahlen,
wobei in die Öffnung des Subreflektors (103) ein Polarisationsfilter eingebaut ist,
wobei das Radarsignal mit der ersten Polarisation das Polarisationsfilter passieren kann, und
wobei das Radarsignal mit der zweiten Polarisation von dem Polarisationsfilter blockiert wird.

10. System nach einem der vorhergehenden Ansprüche,
wobei die Sende- und Empfangseinheit (101) dazu ausgeführt ist, mindestens zwei unterschiedliche Radarsignale, ein Radarsignal mit einer ersten Frequenz und ein weiteres Radarsignal mit einer zweiten Frequenz einzuspeisen und zu empfangen,
wobei die erste Frequenz oberhalb einer Grenzfrequenz liegt,
wobei die zweite Frequenz unterhalb der Grenzfrequenz liegt, und
wobei die Öffnung (104) im Subreflektor (103) als Hohlleiter ausgeführt ist, so dass nur Radarsignale über der Grenzfrequenz darin ausbreitungsfähig sind.

11. System nach einem der vorhergehenden Ansprüche,
wobei die Auswerteeinheit (1040) dazu ausgeführt ist, vier Echos des abgestrahlten Radarsignals zur Analyse der Oberfläche (1041) des Füllgutes in dem Behälter (1043) auszuwerten,
wobei ein erstes Echo durch Propagation des Radarsignals durch die Öffnung des Subreflektors (103) im Sendemodus und im Empfangsmodus entsteht,
wobei ein zweites Echo durch Propagation des Radarsignals durch die Öffnung des Subreflektors im Sendemodus und über den Parabolspiegel (102) und den Subreflektor im Empfangsmodus entsteht,
wobei ein drittes Echo durch Propagation des Radarsignals über den Subreflektor und den Parabolspiegel im Sendemodus und durch die Öffnung des Subreflektors im Empfangsmodus entsteht, und
wobei ein viertes Echo durch Propagation des Radarsignals über den Subreflektor und den Parabolspiegel im Sendemodus und im Empfangsmodus entsteht.

12. System nach einem der vorhergehenden Ansprüche,
wobei die Parabolantenne nach Anspruch 9 ausgeführt ist, und
wobei die Auswerteeinheit (1040) dazu ausgeführt ist, vier Echos auszuwerten, wenn das Radarsignal mit der ersten Polarisation abgestrahlt wurde, und
wobei die Auswerteeinheit dazu ausgeführt ist, ein Echo auszuwerten, wenn das Radarsignal mit der zweiten Polarisation abgestrahlt wurde.

13. Verfahren zur Füllstandmessung eines Füllgutes in einem Behälter, das Verfahren aufweisend die Schritte:
Abstrahlen eines Radarsignals von einer Sende- und Empfangseinheit (101) einer Parabolantenne in Richtung eines Subreflektors (103) der Parabolantenne,
Propagieren eines ersten Teils des abgestrahlten Radarsignals durch eine Öffnung des Subreflektors, wobei dieser erste Teil des Radarsignals mit einer ersten Richtcharakteristik in Richtung des Füllgutes abgestrahlt wird,
Reflektieren eines zweiten Teils des abgestrahlten Radarsignals vom Subreflektor zu einem Parabolspiegel (102) und von dem Parabolspiegel in Richtung des Füllgutes, wobei dieser zweite Teil des Radarsignals mit einer zweiten Richtcharakteristik und einer längeren Laufzeit im Vergleich zu dem ersten Teil des abgestrahlten Radarsignals in Richtung des Füllgutes abgestrahlt wird,
Empfangen eines ersten Teils des von dem Füllgut reflektierten Radarsignals auf direktem Weg durch die Öffnung des Subreflektors mittels der Sende- und Empfangseinheit der Parabolantenne,
Empfangen eines zweiten Teils des von dem Füllgut reflektierten Radarsignals über den Parabolspiegel und den Subreflektor mittels der Sende- und Empfangseinheit der Parabolantenne, und
Auswerten der empfangenen Radarsignale durch eine Auswerteeinheit (1040) zur Bestimmung des Füllstands des Füllgutes in dem Behälter (1043).

14. Verfahren nach Anspruch 13,
wobei die Auswerteeinheit (1040) vier Echos des abgestrahlten Radarsignals auswertet,
wobei ein erstes Echo durch Propagation des Radarsignals durch die Öffnung des Subreflektors (103) im Sendemodus und im Empfangsmodus entsteht,
wobei ein zweites Echo durch Propagation des Radarsignals durch die Öffnung des Subreflektors im Sendemodus und über den Parabolspiegel (102) und den Subreflektor im Empfangsmodus entsteht,
wobei ein drittes Echo durch Propagation des Radarsignals über den Subreflektor und den Parabolspiegel im Sendemodus und durch die Öffnung des Subreflektors im Empfangsmodus entsteht, und
wobei ein viertes Echo durch Propagation des Radarsignals über den Subreflektor und den Parabolspiegel im Sendemodus und im Empfangsmodus entsteht.

## Claims

1. System for analyzing a surface of a filling material in a container, the system comprising:
a parabolic antenna (100) for providing two different directional characteristics, the parabolic antenna comprising:
a transmitting and receiving unit (101) for feeding and receiving a radar signal;
a parabolic mirror (102) for reflecting the radar signal;
a subreflector (103) for reflecting the radar signal,
wherein the subreflector comprises an opening (104)
an evaluation unit (1040) for analyzing the surface (1041) of the filling material in the container (1043) based on echoes of the radar signal emitted by the parabolic antenna.

2. System according to claim 1,
wherein the opening (104) in the subreflector (103) provides a first directional characteristic, and
wherein the parabolic mirror (102) provides a second directional characteristic.

3. System according to any of the preceding claims,
wherein the parabolic antenna is designed in such a way that in a transmitting mode the radar signal can be emitted from the transmitting and receiving unit (101) in direction of the subreflector (103), and
wherein the parabolic antenna is designed in such a way that a first portion of this radar signal can pass through the opening of the subreflector, so that this first portion of the radar signal can be emitted with the first directional characteristic in direction of an object, and
wherein the parabolic antenna is designed in such a way that a second portion of the radar signal can be reflected from the subreflector to the parabolic mirror (102) and from there in direction of the object, so that this second portion of the radar signal can be emitted with the second directional characteristic and longer transit time compared to the first portion of the radar signal.

4. System according to claim 3,
wherein the parabolic antenna is designed to receive in a receiving mode a first portion of the radar signal reflected from the object directly through the opening (104) of the subreflector (103) by means of the transmitting and receiving unit (101), and
wherein the parabolic antenna is designed to receive a second portion of the radar signal reflected from the object via the parabolic mirror (102) and the subreflector by means of the transmitting and receiving unit.

5. System according to any of the preceding claims,
wherein the opening (104) of the subreflector (103) is designed as a waveguide and
whereby a horn antenna, a rod antenna or a patch antenna array is arranged at the waveguide in the subreflector in direction of the object.

6. System according to claim 5,
wherein the horn antenna (814) at the waveguide of the subreflector (803) is partially filled with a filling material (830).

7. System according to any of the preceding claims,
wherein the opening in the subreflector (703) is widened on a side (724) facing the transmitting and receiving unit (701).

8. System according to any of the preceding claims,
wherein the transmitting and receiving unit (901) is designed in form of a horn antenna.

9. System according to any of the preceding claims,
wherein the transmitting and receiving unit (101) is designed to emit at least two different radar signals, one radar signal with a first polarization and a further radar signal with a second polarization,
wherein a polarizing filter is integrated in the opening of the subreflector (103),
wherein the radar signal with the first polarization can pass the polarization filter, and
wherein the radar signal with the second polarization is blocked by the polarization filter.

10. System according to any of the preceding claims,
wherein the transmitting and receiving unit (101) is designed to feed and receive at least two different radar signals, a radar signal with a first frequency and a further radar signal with a second frequency,
wherein the first frequency is above a limit frequency,
wherein the second frequency is below the limit frequency, and
wherein the opening (104) in the subreflector (103) is designed as waveguide so that only radar signals above the limit frequency are able to propagate therein.

11. System according to any of the preceding claims,
wherein the evaluation unit (1040) is designed to evaluate four echoes of the emitted radar signal for analyzing the surface (1041) of the filling material in the container (1043),
wherein a first echo arises by propagating the radar signal through the opening of the subreflector (103) in the transmitting mode and in the receiving mode,
wherein a second echo arises by propagating the radar signal through the opening of the subreflector in the transmitting mode and via the parabolic mirror (102) and the subreflector in the receiving mode,
wherein a third echo arises by propagating the radar signal via the subreflector and the parabolic mirror in the transmitting mode and through the opening of the subreflector in the receiving mode, and
where a fourth echo arises by propagating the radar signal via the subreflector and the parabolic mirror in the transmitting mode and in the receiving mode.

12. System according to any of the preceding claims,
wherein the parabolic antenna is designed according to claim 9, and
wherein the evaluation unit (1040) is designed to evaluate four echoes when the radar signal has been emitted with the first polarization, and
wherein the evaluation unit is designed to evaluate an echoes when the radar signal has been emitted with the second polarization.

13. Method for measuring a fill level of a filling material in a container, the method comprising the steps of:
emitting a radar signal from a transmitting and receiving unit (101) of a parabolic antenna in direction of a subreflector (103) of the parabolic antenna,
propagating a first portion of the emitted radar signal through an opening of the subreflector, wherein this first portion of the radar signal is emitted with a first directional characteristic in direction of the filling material,
reflecting a second portion of the emitted radar signal from the subreflector to a parabolic mirror (102) and from the parabolic mirror in direction of the filling material, wherein this second portion of the radar signal is emitted in direction of the filling material with a second directional characteristic and a longer transit time compared to the first portion of the emitted radar signal,
receiving a first portion of the radar signal reflected from the filling material directly through the opening of the subreflector by means of the emitting and receiving unit of the parabolic antenna,
receiving a second portion of the radar signal reflected from the filling material via the parabolic mirror and the subreflector by means of the emitting and receiving unit of the parabolic antenna, and
evaluating the received radar signals by an evaluation unit (1040) to determine the fill level of the filling material in the container (1043).

14. Method according to claim 13,
wherein the evaluation unit (1040) evaluates four echoes of the emitted radar signal,
wherein a first echo arises by propagating the radar signal through the opening of the subreflector (103) in the transmitting mode and in the receiving mode,
wherein a second echo arises by propagating the radar signal through the opening of the subreflector in the transmitting mode and via the parabolic mirror (102) and the subreflector in the receiving mode,
wherein a third echo arises by propagating the radar signal via the subreflector and the parabolic mirror in the transmitting mode and through the opening of the subreflector in the receiving mode, and
wherein a fourth echo arises by propagating the radar signal via the subreflector and the parabolic mirror in the transmitting mode and in the receiving mode.

## Revendications

1. Système d'analyse de surface d'un matériau de remplissage dans un récipient, le système comportant :
une antenne parabolique (100) permettant de fournir deux caractéristiques directionnelles différentes, l'antenne parabolique comportant :
une unité émettrice et réceptrice (101) permettant d'injecter et de recevoir un signal radar ;
un miroir parabolique (102) permettant de réfléchir le signal radar ;
un réflecteur secondaire (103) permettant de réfléchir le signal radar,
dans lequel le réflecteur secondaire comporte une ouverture (104) ;
une unité de traitement (1040) permettant d'analyser la surface (1041) du matériau de remplissage dans le récipient (1043) en se basant sur l'écho du signal radar émis par l'antenne parabolique.

2. Système selon la revendication 1,
dans lequel l'ouverture (104) dans le réflecteur secondaire (103) fournit une première caractéristique directionnelle, et
dans lequel le miroir parabolique (102) fournit une deuxième caractéristique directionnelle.

3. Système selon l'une des revendications précédentes,
dans lequel l'antenne parabolique est réalisée de telle sorte que dans un mode d'émission le signal radar peut être émis par l'unité émettrice et réceptrice (101) dans la direction du réflecteur secondaire (103), et
dans lequel l'antenne parabolique est réalisée de telle sorte qu'une première partie de ce signal radar peut passer à travers l'ouverture du réflecteur secondaire, de sorte que cette première partie du signal radar peut être émise avec la première caractéristique directionnelle dans la direction d'un objet, et
dans lequel l'antenne parabolique est réalisée de telle sorte qu'une deuxième partie du signal radar peut être réfléchie du réflecteur secondaire au miroir parabolique (102) et de là dans la direction de l'objet, de sorte que cette deuxième partie du signal radar peut être émise avec la deuxième caractéristique directionnelle et avec un temps de parcours plus long comparé à la première partie du signal radar.

4. Système selon la revendication 3,
dans lequel l'antenne parabolique est réalisée de façon à recevoir dans un mode de réception une première partie du signal radar réfléchi par l'objet directement à travers l'ouverture (104) du réflecteur secondaire (103) au moyen de l'unité émettrice et réceptrice (101), et
dans lequel l'antenne parabolique est réalisée de façon à recevoir une deuxième partie du signal radar réfléchi par l'objet par le biais du miroir parabolique (102) et du réflecteur secondaire au moyen de l'unité émettrice et réceptrice (101).

5. Système selon l'une des revendications précédentes, dans lequel l'ouverture (104) du réflecteur secondaire (103) est réalisée comme guide d'ondes et
dans lequel une antenne cône ou une antenne fouet ou un groupe d'antennes patch est agencé au guide d'ondes dans le réflecteur secondaire dans la direction de l'objet.

6. Système selon la revendication 5,
dans lequel l'antenne cône (814) sur le guide d'ondes du réflecteur secondaire (803) est remplie partiellement avec une matière de remplissage (830).

7. Système selon l'une des revendications précédentes,
dans lequel l'ouverture dans le réflecteur secondaire (703) est élargie sur un côté (724) tourné vers l'unité émettrice et réceptrice (701).

8. Système selon l'une des revendications précédentes,
dans lequel l'unité émettrice et réceptrice (901) est réalisée sous forme d'une antenne cône.

9. Système selon l'une des revendications précédentes,
dans lequel l'unité émettrice et réceptrice (101) est réalisée de façon à émettre aux moins deux signaux radar différents, un signal radar avec une première polarisation et un signal radar supplémentaire avec une deuxième polarisation,
dans lequel un filtre polarisant est installé dans l'ouverture du réflecteur secondaire (103),
dans lequel le signal radar avec la première polarisation peut passer le filtre polarisant, et
dans lequel le signal radar avec la deuxième polarisation est bloqué par le filtre polarisant.

10. Système selon l'une des revendications précédentes,
dans lequel l'unité émettrice et réceptrice (101) est réalisée de façon à injecter et à recevoir aux moins deux signaux radar différents, un signal radar avec une première fréquence et un signal radar supplémentaire avec une deuxième fréquence,
dans lequel la première fréquence est supérieure à une fréquence limite,
dans lequel la deuxième fréquence est inférieure à une fréquence limite, et
dans lequel l'ouverture (104) dans le réflecteur secondaire (103) est réalisée comme guide d'ondes, de telle sorte que seuls les signaux radar au-dessus de la fréquence limite peuvent se propager à l'intérieur.

11. Système selon l'une des revendications précédentes,
dans lequel l'unité de traitement (1040) est réalisée de façon à traiter quatre échos du signal radar réfléchi afin d'analyser la surface (1041) du matériau de remplissage dans le récipient (1043),
dans lequel un premier écho apparaît par propagation du signal radar à travers l'ouverture du réflecteur secondaire (103) dans le mode d'émission et dans le mode de réception, dans lequel un deuxième écho apparaît par propagation du signal radar à travers l'ouverture du réflecteur secondaire dans le mode d'émission et par le biais du miroir parabolique (102) et du réflecteur secondaire dans le mode de réception,
dans lequel un troisième écho apparaît par propagation du signal radar par le biais du réflecteur secondaire et du miroir parabolique dans le mode d'émission et à travers l'ouverture du réflecteur secondaire dans le mode de réception, et
dans lequel un quatrième écho apparaît par propagation du signal radar par le biais du réflecteur secondaire et du miroir parabolique dans le mode d'émission et dans le mode de réception.

12. Système selon l'une des revendications précédentes,
dans lequel l'antenne parabolique est réalisée selon la revendication 9, et
dans lequel l'unité de traitement (1040) est réalisée de façon à traiter quatre échos lorsque le signal radar est émis avec la première polarisation, et
dans lequel l'unité de traitement est réalisée de façon à traiter un écho lorsque le signal radar est émis avec la deuxième polarisation.

13. Procédé de mesure de remplissage d'un matériau de remplissage dans un récipient, le procédé comportant les étapes :
émission d'un signal radar depuis une unité émettrice et réceptrice (101) d'une antenne parabolique en direction d'un réflecteur secondaire (103) de l'antenne parabolique,
propagation d'une première partie du signal radar émis à travers une ouverture du réflecteur secondaire, dans lequel cette première partie du signal radar est émise avec une première caractéristique directionnelle en direction du matériau de remplissage,
réflexion d'une deuxième partie du signal radar émis du réflecteur secondaire à un miroir parabolique (102) et du miroir parabolique en direction du matériau de remplissage, dans lequel cette deuxième partie du signal radar est émise avec une deuxième caractéristique directionnelle et avec un temps de parcours plus long comparé à la première partie du signal radar en direction du matériau de remplissage,
réception d'une première partie du signal radar réfléchi par le matériau de remplissage directement à travers l'ouverture du réflecteur secondaire au moyen de l'unité émettrice et réceptrice de l'antenne parabolique,
réception d'une deuxième partie du signal radar réfléchi par le biais du miroir parabolique et du réflecteur secondaire au moyen de l'unité émettrice et réceptrice de l'antenne parabolique, et
traitement des signaux radar reçus par une unité de traitement (1040) afin de déterminer le niveau de remplissage du matériau de remplissage dans le récipient (1043).

14. Procédé selon la revendication 13,
dans lequel l'unité de traitement (1040) traite quatre échos du signal radar émis,
dans lequel un premier écho apparaît par propagation du signal radar à travers l'ouverture du réflecteur secondaire (103) dans le mode d'émission et dans le mode de réception, dans lequel un deuxième écho apparaît par propagation du signal radar à travers l'ouverture du réflecteur secondaire dans le mode d'émission et par le biais du miroir parabolique (102) et du réflecteur secondaire dans le mode de réception,
dans lequel un troisième écho apparaît par propagation du signal radar par le biais du réflecteur secondaire et du miroir parabolique dans le mode d'émission et à travers l'ouverture du réflecteur secondaire dans le mode de réception, et
dans lequel un quatrième écho apparaît par propagation du signal radar par le biais du réflecteur secondaire et du miroir parabolique dans le mode d'émission et dans le mode de réception.
